# FASCICULE DE BREVET EUROPEEN

(11) **EP 4 183 242 B1**
(45) Date de publication et mention de la délivrance du brevet: **15.05.2024**
(21) Numéro de dépôt: 22208587.0
(22) Date de dépôt: 21.11.2022
(51) Int. Cl.: A01D 57/30, A01D 34/66

(54) **MACHINE DE FAUCHE AVEC AU MOINS UN DISPOSITIF DE GROUPAGE À ENTRAINEMENT AMÉLIORÉ**
MÄHMASCHINE MIT MINDESTENS EINER GRUPPIERVORRICHTUNG MIT VERBESSERTEM ANTRIEB
MOWING MACHINE WITH AT LEAST ONE GROUPING DEVICE WITH AN IMPROVED DRIVE

(30) Priorité: 22.11.2021 FR 2112304
(43) Date de publication de la demande: 24.05.2023
(73) Titulaire: Kuhn SAS, 67700 Saverne (FR)
(72) Inventeur: BRUYEN, Thomas, 57370 HANGWILLER (FR); WILHELM, Joël, 57820 SAINT-LOUIS (FR)
(74) Mandataire: Hager, Esther Evelyne

(56) Documents cités:
- EP-A1- 3 014 974
- DE-A1- 19 715 813
- DE-A1-102019 105 170
- US-A- 4 392 339

## Description

L'invention concerne une machine agricole du type faucheuse équipée de moyens de groupage présentant des moyens d'entrainement améliorés.

Plus spécifiquement, l'invention vise une machine de fauche destinée à être déplacée suivant une direction d'avance et comportant un châssis et au moins une unité de travail de forme allongée et reliée au châssis par une potence apte à pivoter par rapport audit châssis autour d'un axe d'élévation de manière à transposer l'unité de travail entre une configuration d'utilisation dans laquelle elle est en contact avec un sol et au moins une configuration de manoeuvre dans laquelle l'unité de travail est légèrement soulevée, l'unité de travail comprenant une barre de coupe et un dispositif de groupage des produits fauchés. La barre de coupe comprend une pluralité d'organes de coupe entrainés en rotation et sensiblement alignés transversalement à la direction d'avance de la machine en utilisation. Le dispositif de groupage est situé à l'arrière de la barre de coupe suivant la direction d'avance et comporte une vis groupeuse montée avec guidage en rotation autour d'un axe au moins sensiblement perpendiculaire à ladite direction d'avance. Les spires de la vis groupeuse sont orientées de sorte que sa rotation permette de déplacer les produits fauchés transversalement à la direction d'avance en direction du châssis. L'unité de travail comporte également un arbre primaire relié à une source d'entrainement, une transmission primaire pour l'entrainement des organes de coupe et une transmission secondaire pour l'entrainement de la vis groupeuse, ces transmissions primaire et secondaire pouvant être reliées cinématiquement audit arbre primaire.

Une telle machine est par exemple connue par le document EP 3 014 974.

Afin d'éviter que le flux de produits fauchés provenant de la vis groupeuse ne soit perturbé par les composantes de la ligne de transmission, la transmission secondaire est située, sur la machine du EP 3 014 974, à l'extrémité extérieure du dispositif de groupage, située du côté opposé au châssis vu selon la direction d'avance.

Ce positionnement de la transmission secondaire entraine la présence d'une masse importante au niveau de l'extrémité extérieure de l'unité de travail, éloignant du châssis le centre de gravité de l'unité de travail, et donc, dans la configuration de manoeuvre de ladite unité des contraintes importantes dans la potence et dans le châssis. Le cas échéant, le positionnement de la transmission secondaire implique également des contraintes additionnelles dans les bras d'attelage du tracteur auquel la machine est attelée, pouvant même aller jusqu'à la déformation desdits bras d'attelage, certains utilisateurs s'obligeant à n'utiliser, avec une telle machine, qu'un tracteur dont les bras d'attelage sont particulièrement robustes, donc souvent plus énergivores.

Dans cette configuration de manoeuvre, ainsi que dans les configurations dans lesquelles elle ne prend pas appui sur le sol, le poids de la transmission secondaire implique aussi un couple déstabilisant du fait de la distance importante entre l'extrémité extérieure de l'unité de travail et le châssis, pouvant provoquer son basculement. Un tel emplacement de la transmission secondaire implique ainsi, lors d'accélérations, de décélérations ou de virages un déséquilibre de la machine pouvant se révéler dangereux.

Enfin, avec un arrangement tel que celui de la machine du EP 3014974, la transmission étant arrangée à la suite de la transmission primaire, la ligne de transmission du mouvement passe par l'engrenage de transmission des organes de coupe, sollicitant davantage celui-ci.

La présente invention a pour but essentiel de pallier les inconvénients exposés ci-dessus.

A cet effet, l'invention vise une machine de fauche destinée à être déplacée suivant une direction d'avance et comportant un châssis et au moins une unité de travail de forme allongée et reliée au châssis par une potence apte à pivoter par rapport audit châssis autour d'un axe d'élévation de manière à transposer l'unité de travail entre une configuration d'utilisation dans laquelle elle est en contact avec un sol et au moins une configuration de manoeuvre dans laquelle l'unité de travail est légèrement soulevée à distance du sol, l'unité de travail comprenant une barre de coupe et un dispositif de groupage des produits fauchés, la barre de coupe comprenant une pluralité d'organes de coupe entrainés en rotation et sensiblement alignés transversalement à la direction d'avance de la machine de fauche en utilisation, le dispositif de groupage étant situé à l'arrière de la barre de coupe suivant la direction d'avance et comportant une vis groupeuse montée avec guidage en rotation autour d'un axe de vis au moins sensiblement perpendiculaire à ladite direction d'avance, les spires de la vis groupeuse étant orientées de sorte que sa rotation permette de déplacer les produits fauchés transversalement à la direction d'avance en direction du châssis, l'unité de travail comportant également un arbre primaire relié à une source d'entrainement, une transmission primaire pour l'entrainement des organes de coupe et une transmission secondaire pour l'entrainement de la vis groupeuse, ces transmissions primaire et secondaire pouvant être reliées cinématiquement audit arbre primaire,
machine de fauche caractérisée en ce que la transmission secondaire (11) est située du côté de l'extrémité intérieure de l'unité de travail vers lequel les produits fauchés sont déplacés par la vis groupeuse.

L'invention sera mieux comprise, grâce à la description ci-après, qui se rapporte à des modes de réalisation préférés, donnés à titre d'exemple non limitatif, et expliqués avec référence aux dessins schématiques annexés, dans lesquels :

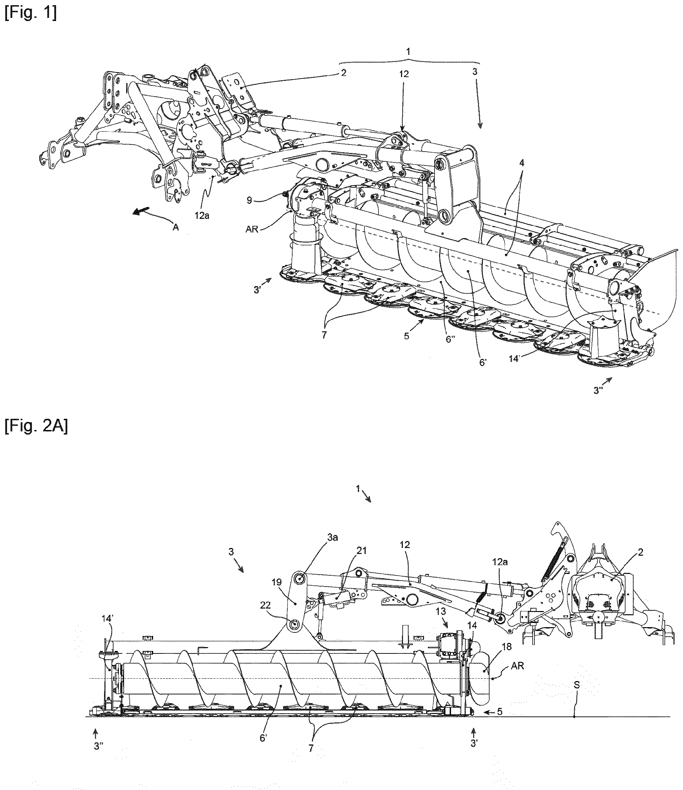

[Fig. 1] est une vue en perspective d'une machine de fauche selon l'invention comportant une unité de travail ;
[Fig. 2A],
[Fig. 2B] et
[Fig. 2C] sont des vues en élévation arrière de la machine de fauche représentée sur la figure 1 (la tôle de contenance étant enlevée), respectivement en configuration d'utilisation (figure 2A - en appui sur le sol), en configuration de manoeuvre (figure 2B - légèrement soulevée) et en configuration de transport (figure 2C - sensiblement verticale) de l'unité de travail ;
[Fig. 3] est une vue en élévation latérale depuis le côté intérieur, d'une unité de travail selon une première variante de réalisation de l'invention ;
[Fig. 4A] et
[Fig. 4B] sont des vues respectivement en perspective et en élévation latérale depuis le côté intérieur, d'une unité de travail selon une seconde variante de réalisation de l'invention, et,
[Fig. 5] est une vue en élévation arrière de la machine de fauche représentée sur la figure 1 (la tôle de contenance étant enlevée) en configuration d'utilisation de l'unité de travail, et dans laquelle l'unité de travail est déportée vers l'extérieur.

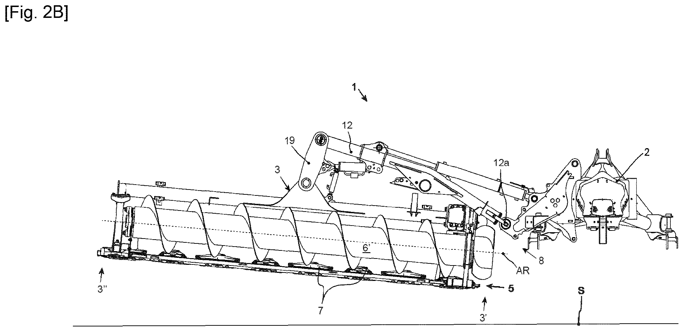

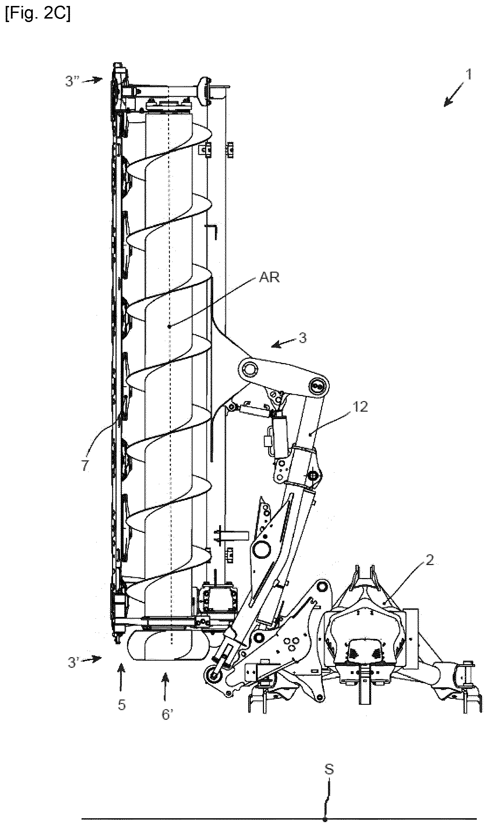

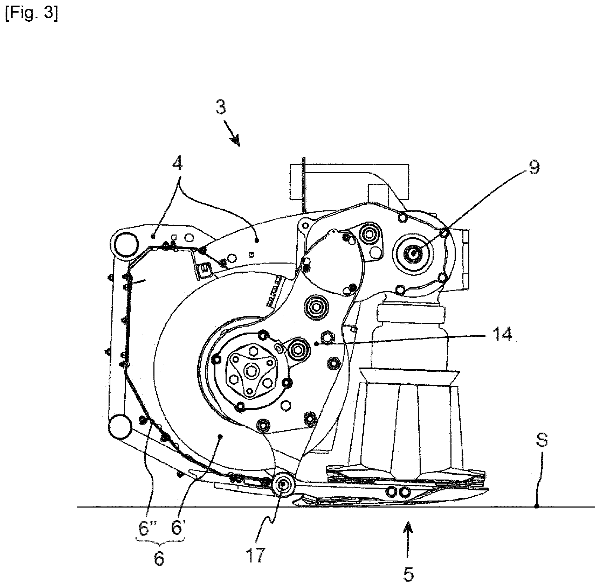

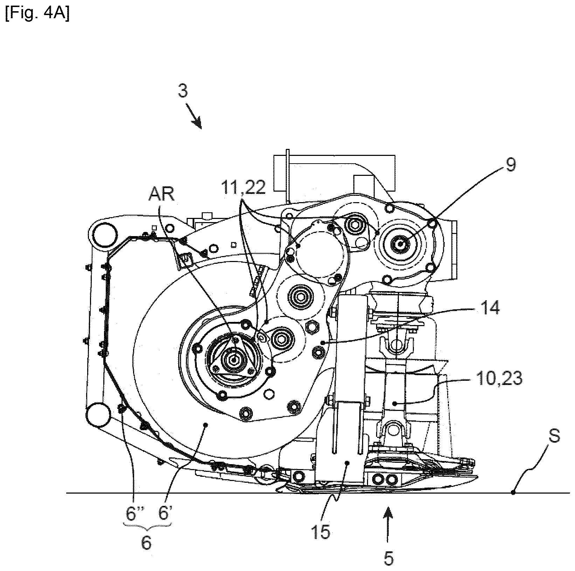

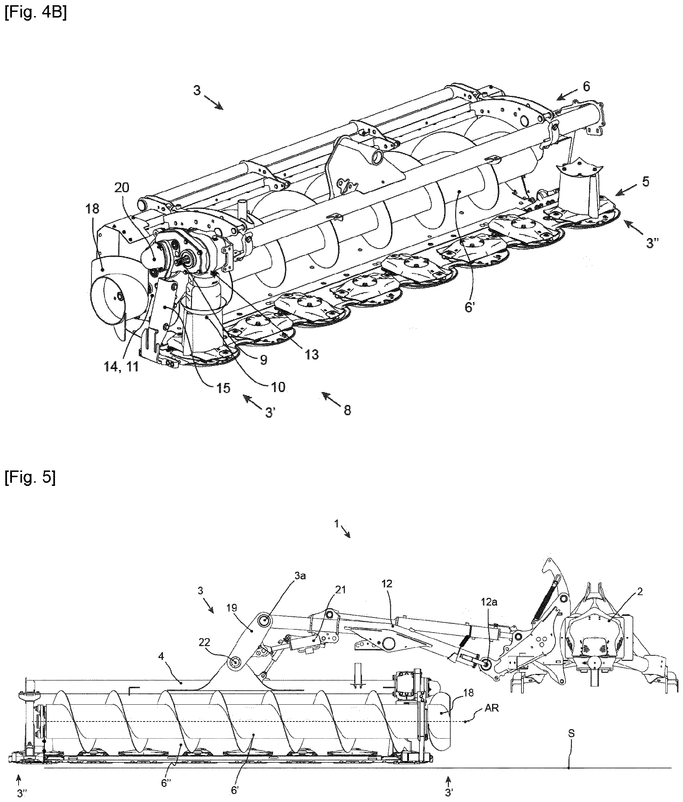

Les figures 1 et 2, et partiellement les figures 3 et 4, montrent une machine de fauche (1) destinée à être déplacée suivant une direction d'avance (A) et comportant un châssis (2) et au moins une unité de travail (3) de forme allongée et reliée au châssis (2) par une potence (12) apte à pivoter par rapport audit châssis (2) autour d'un axe d'élévation (12a) de manière à transposer l'unité de travail (3) entre une configuration d'utilisation dans laquelle elle est en contact avec un sol (S) et au moins une configuration de manoeuvre dans laquelle l'unité de travail (3) est légèrement soulevée. L'unité de travail (3) comprend une barre de coupe (5) et un dispositif de groupage (6) des produits fauchés. La barre de coupe (5) comprend une pluralité d'organes de coupe (7) entrainés en rotation et sensiblement alignés transversalement à la direction d'avance (A) de la machine de fauche (1) en utilisation. Le dispositif de groupage (6) est situé à l'arrière de la barre de coupe (5) suivant la direction d'avance (A) et comporte une vis groupeuse (6`) montée avec guidage en rotation autour d'un axe de vis (AR) au moins sensiblement perpendiculaire à ladite direction d'avance (A). Les spires de la vis groupeuse (6') sont orientées de sorte que sa rotation permette de déplacer les produits fauchés transversalement à la direction d'avance (A) en direction du châssis (2). L'unité de travail (3) comporte également un arbre primaire (9) relié à une source d'entrainement, une transmission primaire (10) pour l'entrainement des organes de coupe (7) et une transmission secondaire (11) pour l'entrainement de la vis groupeuse (6'), ces transmissions primaire et secondaire (10, 11) pouvant être reliées cinématiquement audit arbre primaire (9).

Conformément à l'invention, la transmission secondaire (11) est située du côté de l'extrémité intérieure (3') de l'unité de travail (3) vers lequel les produits fauchés sont déplacés par la vis groupeuse (6').

De ce fait, la masse située à l'extrémité extérieure (3") de l'unité de travail (3) est réduite, ce qui réduit les contraintes dans la potence (12), le châssis, et, le cas échéant, dans les bras d'attelage du tracteur, (2) en configuration de manoeuvre, ainsi que l'effort à fournir (couple) pour soulever ladite unité (3). En outre, dans le cas où la machine de fauche (1) est attelée aux bras d'attelage d'un tracteur, le choix dudit tracteur est moins limité à des tracteurs robustes et puissants.

Le châssis (2) comporte de préférence un dispositif d'attelage trois points pour le relier aux bras d'attelage d'un tracteur. La machine de fauche (1) peut également être de type automoteur. L'unité de travail (3) comporte une ligne de transmission (8) comprenant au moins l'arbre primaire (9) et les transmissions primaire (10) et secondaire (11). L'arbre primaire (9) est relié à la source d'entrainement en rotation pouvant provenir du tracteur. La source d'entrainement pourrait aussi provenir d'un moteur installé sur la machine de fauche (1). Tel que représenté sur les dessins, l'arbre primaire (9) est cannelé de manière à pouvoir le relier à un arbre de transmission télescopique à cardans, également relié à la source d'entrainement. Cette dernière est préférentiellement réalisée par la prise de force du tracteur.

Il ressort des figures 1 et 2 que la potence (12) est articulée au châssis (2) autour de l'axe d'élévation (12a) et de préférence à l'unité de travail (3) autour d'un axe d'unité (3a) sensiblement parallèle à l'axe d'élévation (12a), permettant que l'unité de travail (3) suivent les irrégularités du sol (S) en configuration d'utilisation. L'axe d'élévation (12a) est sensiblement parallèle à la direction d'avance (A) de manière à maximiser la largeur de travail de la machine de fauche (1).

Le dispositif de groupage (6) permet de déposer les produits fauchés par la barre de coupe (5) aux alentours de son extrémité intérieure (3'). Ainsi qu'il ressort de la figure 3, le dispositif de groupage (6) comporte une tôle de contenance (6") maintenant les produits fauchés en contact avec la vis groupeuse (6'). Lors de la rotation de la vis groupeuse (6') les produits fauchés sont ainsi déplacés suivant l'axe de vis (AR) vers le châssis (2). L'axe de vis (AR) est celui autour duquel la vis groupeuse (6') est entrainée en rotation.

Dans la configuration de travail, l'unité de travail (3) est orientée transversalement à la direction d'avance (A) et repose sur le sol (S), sur lequel elle glisse lors de l'avance durant la coupe. La vis groupeuse (6') s'étend sensiblement entre les extrémités de l'unité de travail (3). La vis groupeuse (6') est une vis sans fin. Les spires de la vis groupeuse (6') forment une hélice autour de son âme. Son âme est préférentiellement cylindrique. Le pas de la vis groupeuse (6') est préférentiellement régulier sur toute sa longueur. En outre, ses spires sont orientées de manière à déposer les produits fauchés entre le châssis (2) et l'extrémité intérieure (3') de l'unité de travail (3), de sorte à former un andain parallèle à la direction d'avance (A). La rotation de la vis groupeuse (6') entraine ainsi un flux de produits fauchés orienté sensiblement parallèlement à l'axe de vis (AR).

Il ressort de la figure 2C que l'unité de travail (3) peut occuper une configuration de transport dans laquelle la dimension de la machine de fauche (1) suivant une orientation horizontale et transversale à la direction d'avance (A) est moindre qu'en configuration de travail et de manoeuvre. Dans le mode de réalisation préféré, dans sa configuration de transport, ladite unité de travail (3) est redressée sensiblement à la verticale pour un gain de place en largeur. La largeur est à considérer horizontalement et perpendiculairement à la direction d'avance (A). Dans le mode de réalisation préféré, la machine de fauche (1) est pivotée autour de l'axe d'élévation (12a) pour passer entre les configurations de travail, de manoeuvre et de transport. Dans un mode de réalisation alternatif non représenté, l'unité de travail (3) est repliée vers l'arrière autour d'un axe au moins sensiblement vertical à partir de sa configuration de manoeuvre. Dans ce mode de réalisation alternatif aussi, le fait de rapprocher du châssis (2) le centre de gravité de l'unité de travail (3) permet de réduire les contraintes dans la potence (12), le châssis (2) et, le cas échéant, dans les bras d'attelage du tracteur.

Préférentiellement, en configuration de transport et/ou de manoeuvre de l'unité de travail (3), son extrémité intérieure (3') se trouve en position inférieure par rapport à son extrémité extérieure (3"). De cette manière, du fait que la masse de la transmission secondaire (11) se situe plus proche du sol (S), le centre de gravité de la machine de fauche (1) est abaissé. L'invention permet ainsi d'obtenir une meilleure stabilité de la machine de fauche (1) en configuration de transport et/ou de manoeuvre et d'éviter des efforts importants dans le châssis (2) et la potence (12), tout en conservant une ligne de transmission (8) relativement courte, nécessitant ainsi moins de composants et d'entretien.

Selon une caractéristique bénéfique de l'invention, l'unité de travail (3) comporte un dispositif de distribution (13) à partir duquel la transmission primaire (10) est spécifique audits organes de coupe (7) et la transmission secondaire (11) est spécifique à la vis groupeuse (6'). Chacune des transmissions primaire (10) et secondaire (11) constitue alors une voie de transmission séparée de l'autre et ne doit supporter que le couple de la partie qui lui est spécifique. Les transmission primaire (10) et transmission secondaire (11) sont de ce fait moins sollicitées et ne doivent ainsi pas être dimensionnés de manière à supporter un couple supplémentaire et/ou présentent moins de risques de rupture. Cette distinction des transmissions secondaire (11) et primaire (10) évite notamment de sursolliciter de manière dommageable la transmission primaire (10) ainsi que l'engrenage de transmission des organes de fauche (7) interne à la barre de coupe (5) en cas de bourrage de la vis groupeuse (6').

De préférence, le dispositif de distribution (13) et la transmission primaire (10) sont également situés du côté de l'extrémité intérieure (3') de l'unité de travail (3). Une telle caractéristique permet de réduire davantage encore la masse située à l'extrémité extérieure (3") de l'unité de travail (3) et accentue ainsi encore les bénéfices précités de l'invention. Lorsque la machine de fauche (1) est reliée à un tracteur, sa ligne de transmission (8) comprend l'arbre primaire (9), le dispositif de distribution (13) et les transmissions primaire (10) et secondaire (11), l'arbre de transmission télescopique à cardans (non représenté) relié à l'arbre primaire (9) et, éventuellement, un carter de renvoi ou en T (non représenté).

Alternativement ou additionnellement, au moins une des transmissions primaire et secondaire (10, 11) peut être désaccouplée du dispositif de distribution (13), permettant avantageusement d'entrainer séparément ou indépendamment les organes de coupe (7) et la vis groupeuse (6'). De manière plus simple, seule la transmission secondaire (11) peut être désaccouplée du dispositif de distribution (13) de sorte à pouvoir utiliser les organes de coupe (7) sans la vis groupeuse (6').

Alternativement ou additionnellement, au moins une des transmissions primaire et secondaire (10, 11) peut avantageusement comporter un dispositif de sécurité (20) permettant de la désaccoupler du dispositif de distribution (13), respectivement de la ligne de transmission (8), au-delà d'un certain couple d'entrainement, afin d'éviter des dommages au niveau des transmissions. Désaccoupler une des transmissions primaire et secondaire du dispositif de distribution (13) implique que les transmission primaire (10) et transmission secondaire (11) ne sont plus cinématiquement reliées. De manière simple, ce dispositif de sécurité (20) peut comprendre une goupille ou un boulon de cisaillement transmettant l'entrainement et conçu(e) de manière à se rompre à partir d'un couple prédéterminé. Dans l'exemple représenté sur la figure 4A, le dispositif de sécurité (20) fait partie de la transmission secondaire (11), et, lorsque la vis groupeuse (6') ou les organes de coupe (7) voi(en)t son/leur entrainement en rotation stoppé, le dispositif de sécurité (20) permet de désaccoupler l'entrainement en rotation de la vis groupeuse (6') de celui des organes de coupe (7).

De manière connue, chaque organe de coupe (7) est entrainé en rotation autour d'un axe d'entrainement respectif orienté sensiblement verticalement en configuration de travail. De préférence, tous les axes d'entrainement des organes de coupe (7) sont compris dans un plan.

La transmission secondaire (11) pourrait par ailleurs être une transmission à changement de vitesse afin d'adapter la vitesse de rotation de la vis groupeuse (6') aux conditions et/ou type de fourrage.

Ainsi qu'il ressort de la figure 1 notamment, l'unité de travail (3) comprend également un bâti (4). Le bâti (4) permet notamment de supporter la barre de coupe (5) et le dispositif de groupage (6). Le bâti (4) relie ainsi ces derniers à la potence (12). Le bâti (4), la barre de coupe (5) et l'organe de groupage (6) s'étendent de l'extrémité intérieure (3') à l'extrémité extérieure (3") de l'unité de travail (3). Il est prévu que la vis groupeuse (6') soit reliée au bâti (4) de l'unité de travail (3) par un support intérieur (14) et un support extérieur (14'). En accord avec une construction avantageuse de l'unité de travail (3), la transmission secondaire (11) étant associée au support intérieur (14) soit en étant solidaire de ce support intérieur (14), soit en y étant intégrée. Préférentiellement, la transmission secondaire (11) est intégrée dans le support intérieur (14). Autrement dit, la transmission secondaire (11) est incluse dans le support intérieur (14). Une telle conception permet de simplifier la structure de l'unité de travail (3), de diminuer son poids et le nombre de pièces constitutives et de réduire les obstructions au flux de produits fauchés.

Le guidage en rotation de la vis groupeuse (6') par rapport au bâti (4) est réalisé au niveau des supports (14, 14'). Ainsi qu'il ressort de la figure 2A, le support intérieur (14) est situé à proximité de l'extrémité intérieur (3') de l'unité de travail (3), et de préférence à l'extrémité longitudinale de la vis groupeuse (6') la plus proche du châssis (2). Le support extérieur (14') est situé à proximité de l'extrémité extérieur (3") de l'unité de travail (3), et de préférence à l'extrémité longitudinale de la vis groupeuse (6') la plus éloignée du châssis (2).

Conformément à un mode de réalisation préféré, le support intérieur (14) se présente sous la forme d'un carter, préférentiellement étanche, renfermant la transmission secondaire (11) pour l'entrainement de l'organe de groupage (6'). De préférence, ledit carter du support intérieur (14) renferme également le cas échéant le palier support de l'arbre primaire (9). La mise en oeuvre d'un tel carter permet de protéger et d'isoler la transmission secondaire (11) du milieu extérieur et évite l'introduction de produits fauchés, de débris et de poussières à l'intérieur, qui pourraient générer des frottements voire des blocages par encrassement. En outre, l'entretien est limité.

Ainsi que représenté sur la figure 4B, la transmission secondaire (11) pour l'entrainement de la vis groupeuse (6') se présente sous la forme d'un arrangement de pignons (22) mutuellement engrenants, reliant cinématiquement l'arbre primaire (9) à la vis groupeuse (6'). Un tel arrangement de pignons (22) présente l'avantage de ne pas nécessiter de mécanisme de tension contrairement à une courroie ou à une chaine, tension qu'il faut en outre régulièrement vérifier et adapter pour éviter une usure prématurée.

Grâce à cet arrangement de pignons (22), la forme du support intérieur (14) peut être adaptée aux spécificités de la machine de fauche (1). Afin de ne pas perturber le flux de produits fauchés provenant de la vis groupeuse (6'), le support intérieur (14) présente, vu selon l'axe de vis (AR), un encombrement ne dépassant pas le diamètre extérieur de l'âme de la vis groupeuse (6'), au moins sur la moitié arrière de celle-ci. En effet, le flux de produits fauchés se situe majoritairement au niveau de cette moitié arrière de la vis groupeuse (6'). Par « moitié arrière » de la vis groupeuse (6'), on entend la partie située derrière le plan passant par l'axe de vis (AR) et parallèle au plan contenant les axes d'entrainement des organes de coupe (7).

De préférence, les axes de rotation des pignons (22) de la transmission secondaire (11) sont placés de manière à perturber le moins possible l'évacuation des produits fauchés et à libérer de l'espace derrière et en dessous du pignon (22) monté pivotant autour de l'axe de vis (AR). Sur la figure 4B, chaque pignon (22) de la transmission secondaire (11) est représenté par son diamètre primitif. Ainsi qu'il est visible sur cette figure 4B, la transmission primaire (10) pour l'entrainement des organes de coupe (7) se présente sous la forme d'un arbre secondaire (23) reliant cinématiquement l'arbre primaire (9) à un organe de coupe (7), préférentiellement le plus proche du châssis (2). Dans cet exemple de réalisation, le dispositif de distribution (13) est réalisé par des cannelures sur l'arbre primaire (9) engrenant avec celles d'un pignon (22) de la transmission secondaire (11) et par un couple conique dont un des pignons à denture conique est monté sur l'arbre primaire (9) et l'autre sur l'arbre secondaire (23).

En accord avec une première variante de réalisation illustrée sur la figure 3, le support intérieur (14) relie la barre de coupe (5) au bâti (4), assurant ainsi également la solidarisation de la barre de coupe (5) avec le bâti (4) de l'unité de travail (3). Ainsi, il est possible d'économiser un montant additionnel supportant la barre de coupe (5) à proximité de l'extrémité intérieure (3') de l'unité de travail (3).

De manière similaire, il peut être prévu que le support extérieur (14') serve avantageusement également à la solidarisation de ladite barre de coupe (5) avec ledit bâti (4) de l'unité de travail (3), permettant d'économiser un montant additionnel.

Conformément à une deuxième variante de réalisation ressortant des figures 4A et 4B, la barre de coupe (5) est reliée au bâti (4) de l'unité de travail (3) par un montant support (15) à proximité de l'extrémité intérieure (3') de l'unité de travail (3). Ce montant support (15) est préférentiellement situé latéralement par rapport à la barre de coupe (5). Il permet d'aboutir à un renforcement structurel et à une plus grande rigidité de l'unité de travail (3). Le montant support (15) se situe préférentiellement à l'arrière de la barre de coupe (5) en vue selon l'axe de vis (AR), permettant de libérer de l'espace derrière la barre de coupe (5), évitant une surface additionnelle d'accroche pour le flux de produits fauchés provenant de la vis groupeuse (6'), et favorisant l'évacuation de ceux-ci. Un tel montant support (15) permet également d'éviter la formation de paquets de produits fauchés, aboutissant de ce fait à un andain plus régulier. Le montant support (15), ou, le cas échéant, le support intérieur (14), est préférentiellement raccordé à l'extrémité intérieure de la barre de coupe (5) par un silentbloc (17).

Selon une caractéristique additionnelle de l'invention représentée sur les figures 2A et 5, l'unité de travail (3) comprend en outre une vis d'évacuation (18) arrangée dans la continuité axiale de la vis groupeuse (6') entre le châssis (2) et le support intérieur (14). Cette vis d'évacuation (18) permet de limiter, voire de supprimer, tout risque d'accumulation de produits fauchés autour du montant support (15) ou support intérieur (14), de fluidifier leur évacuation et d'éviter les bourrages au niveau du col du canal d'évacuation. Dans le mode de réalisation représentée, la vis d'évacuation (18) est de préférence entrainée en rotation autour de l'axe de vis (AR). De manière simple, la vis d'évacuation (18) est solidaire en rotation avec la vis groupeuse (6'). Afin de favoriser l'évacuation du fourrage, la vis d'évacuation (18) peut être reliée à la vis groupeuse (6') par le biais d'une transmission à changement de vitesse, de préférence de manière à faire tourner la vis d'évacuation (18) plus rapidement. En vue de placer une transmission à changement de vitesse par pignons entre l'arbre de la vis groupeuse (6') et celui de la vis d'évacuation (18), ces dernières peuvent être désaxées. En outre, en vue de diriger le flux de produits fauchés, l'axe de rotation de la vis d'évacuation (18) peut également former un angle avec celui de la vis groupeuse (6'), préférentiellement en vue de dessus. Ainsi, la ou les forme(s) de la vis d'évacuation (18), de son âme et/ou de ses spires peut/peuvent être différente(s) de celle(s) de la vis groupeuse (6'). Sur la figure 2C notamment, la vis d'évacuation (18) présente un pas de vis différent, un nombre et une forme de spires ou de filets différents de ceux de la vis groupeuse (6').

L'unité de travail (3) est articulée avec la potence (12) selon un axe d'unité (3a). Ainsi qu'il ressort des figures 2A et 5, l'unité de travail (3) peut être reliée à la potence (12) par le biais d'une bielle de déport (19) articulée avec la potence (12) et avec l'unité de travail (3) de manière à pouvoir être déplacée sensiblement longitudinalement à l'axe de vis (AR). De préférence, la bielle de déport (19) est articulée à la potence (12) selon l'axe d'unité (3a) et avec l'unité de travail (3) selon un axe de déport (22), ces axes étant de préférence sensiblement parallèles. Préférentiellement, un vérin de déport (21) est articulé avec la bielle de déport (19) et avec la potence (12) et permet de déplacer l'unité de travail (3) transversalement à la direction d'avance (A). Cet agencement permet ainsi de réduire la hauteur de la machine de fauche (1) en configuration de transport tout en autorisant le placement précis de l'unité de travail (3) par rapport au tracteur. Une telle possibilité de placement est notamment utile pour adapter la position de la machine de fauche (1) à la largeur d'une éventuelle faucheuse frontale attelée à l'avant du tracteur. Une telle construction implique donc que la distance entre l'extrémité extérieure (3") de l'unité de travail et le châssis (2) peut être plus importante, faisant ressortir encore les avantages de rapprocher le centre de gravité de l'unité de travail (3) vers le châssis (2).

Sur les figures 1, 2A et 5, la machine de fauche (1) comporte une unique unité de travail (3), reliée au châssis (2) par une potence (12), préférentiellement équipé de vérins hydrauliques ou électriques.

La machine de fauche (1) peut cependant comprendre deux unités de travail (3) reliées chacune au châssis (2) par une potence (12) respective. Dans ce cas, l'agencement de la bielle de déport (19) permet également d'adapter la largeur de l'andain de produits fauchés, déposé par les vis groupeuses (6), à la largeur de travail de la machine de récolte. La machine de fauche (1) peut comprendre un nombre d'unités de travail (3) pair supérieur à deux. De préférence, les unités de travail (3) sont arrangées de manière symétrique par rapport au châssis (2), et donc normalement aussi symétriquement par rapport au plan médian du tracteur, en vue d'un bon équilibre.

Bien entendu, l'invention n'est pas limitée aux modes de réalisation décrits et représentés aux dessins annexés. Des modifications restent possibles, notamment du point de vue de la constitution des divers éléments dans la limite définie par les revendications.

## Revendications

1. Machine de fauche (1) destinée à être déplacée suivant une direction d'avance (A) et comportant un châssis (2) et au moins une unité de travail (3) de forme allongée et reliée au châssis (2) par une potence (12) apte à pivoter par rapport audit châssis (2) autour d'un axe d'élévation (12a) de manière à transposer l'unité de travail (3) entre une configuration d'utilisation dans laquelle elle est en contact avec un sol (S) et au moins une configuration de manoeuvre dans laquelle l'unité de travail (3) est légèrement soulevée à distance du sol, l'unité de travail (3) comprenant une barre de coupe (5) et un dispositif de groupage (6) des produits fauchés, la barre de coupe (5) comprenant une pluralité d'organes de coupe (7) entrainés en rotation et sensiblement alignés transversalement à la direction d'avance (A) de la machine de fauche (1) en utilisation, le dispositif de groupage (6) étant situé à l'arrière de la barre de coupe (5) suivant la direction d'avance (A) et comportant une vis groupeuse (6') montée avec guidage en rotation autour d'un axe de vis (AR) au moins sensiblement perpendiculaire à ladite direction d'avance (A), les spires de la vis groupeuse (6') étant orientées de sorte que sa rotation permette de déplacer les produits fauchés transversalement à la direction d'avance (A) en direction du châssis (2), l'unité de travail (3) comportant également un arbre primaire (9) relié à une source d'entrainement, une transmission primaire (10) pour l'entrainement des organes de coupe (7) et une transmission secondaire (11) pour l'entrainement de la vis groupeuse (6'), ces transmissions primaire et secondaire (10, 11) pouvant être reliées cinématiquement audit arbre primaire (9),
machine de fauche (1) **caractérisée en ce que** la transmission secondaire (11) est située du côté de l'extrémité intérieure (3') de l'unité de travail (3) vers lequel les produits fauchés sont déplacés par la vis groupeuse (6').

2. Machine de fauche selon la revendication 1, **caractérisée en ce que** l'unité de travail (3) peut également occuper une configuration de transport, et **en ce qu'**en configuration de transport et/ou de manoeuvre de l'unité de travail (3), son extrémité intérieure (3') se trouve en position inférieure par rapport à son extrémité extérieure (3").

3. Machine de fauche selon la revendication 1 ou 2, **caractérisée en ce que** l'unité de travail (3) comporte un dispositif de distribution (13) à partir duquel la transmission primaire (10) est spécifique audits organes de coupe (7) et la transmission secondaire (11) est spécifique à la vis groupeuse (6').

4. Machine de fauche selon la revendication 3, **caractérisée en ce que** le dispositif de distribution (13) et la transmission primaire (10) sont situés du côté de l'extrémité intérieure (3') de l'unité de travail (3).

5. Machine de fauche selon l'une quelconque des revendications 1 à 4, **caractérisée en ce que** la vis groupeuse (6') est reliée à un bâti (4) de l'unité de travail (3) par un support intérieur (14) et un support extérieur (14'), la transmission secondaire (11) étant associée au support intérieur (14) soit en étant solidaire de ce support intérieur (14), soit en y étant intégrée.

6. Machine de fauche selon l'une quelconque des revendications 1 à 5, **caractérisée en ce que** la transmission secondaire (11) pour l'entrainement de la vis groupeuse (6') se présente sous la forme d'un arrangement de pignons (22) mutuellement engrenants, reliant cinématiquement l'arbre primaire (9) à la vis groupeuse (6').

7. Machine de fauche selon l'une quelconque des revendications 1 à 6, **caractérisée en ce que** la barre de coupe (5) est reliée au ou à un bâti (4) de l'unité de travail (3) par un montant support (15) à proximité de l'extrémité intérieure (3') de l'unité de travail (3).

8. Machine de fauche selon l'une quelconque des revendications 5 et 7, **caractérisée en ce que** la vis groupeuse (6') est reliée au bâti (4) de l'unité de travail (3) par le ou un support intérieur (14) et le ou un support extérieur (14'), et **en ce que** l'unité de travail (3) comprend en outre une vis d'évacuation (18) arrangée dans la continuité axiale de la vis groupeuse (6') entre le châssis (2) et le support intérieur (14).

9. Machine de fauche selon l'une quelconque des revendications 1 à 8, **caractérisée en ce que** l'unité de travail (3) est reliée à la potence (12) par le biais d'une bielle de déport (19) articulée avec la potence (12) et avec l'unité de travail (3) de manière à pouvoir être déplacée sensiblement longitudinalement à l'axe de vis (AR).

10. Machine de fauche selon l'une quelconque des revendications 5, 7 et 8, **caractérisée en ce que** la vis groupeuse (6') est reliée au bâti (4) de l'unité de travail (3) par le ou un support intérieur (14) et le ou un support extérieur (14'), et **en ce que** le support intérieur (14) présente, vu selon l'axe de vis (AR), un encombrement ne dépassant pas le diamètre extérieur de l'âme de la vis groupeuse (6'), au moins sur la moitié arrière de celle-ci.

## Patentansprüche

1. Mähmaschine (1), die dazu bestimmt ist gemäss einer Vorschubrichtung (A) bewegt zu werden, mit einem Rahmen (2) und mindestens einer Arbeitseinheit (3) von länglicher Form, die mit dem Rahmen (2) über einen Tragarm (2) verbunden ist, der bezüglich des Rahmens (2) um eine Hochhebungsachse (12a) schwenken kann, um die Arbeitseinheit (3) von einer Verwendungskonfiguration, in welcher sie mit einem Boden (S) in Kontakt ist, in mindestens eine Manövrierkonfiguration zu bringen, in welcher die Arbeitseinheit (3) leicht vom Boden angehoben ist, wobei die Arbeitseinheit (3) einen Mähbalken (5) und eine Gruppiervorrichtung (6) für die gemähte Produkte aufweist, wobei der Mähbalken (5) eine Vielzahl von Mähelementen (7) umfasst, die drehangetrieben und im Wesentlichen quer zur Vorschubrichtung (A) beim Betrieb der Mähmaschine (1) ausgerichtet sind, wobei die Gruppiervorrichtung (6) sich hinter dem Mähbalken entlang der Vorschubrichtung (A) erstreckt und eine Gruppierschnecke (6') aufweist, die drehbar geführt um eine Schneckenachse (AR) angebracht ist, die mindestens im Wesentlichen senkrecht zur Vorschubrichtung (A) verläuft, wobei die Windungen der Gruppierschnecke (6') derart ausgerichtet sind, dass ihre Drehung eine Querverschiebung der gemähten Produkten bezüglich der Vorschubrichtung (A) in Richtung des Rahmens (2) gestattet, wobei die Arbeitseinheit (3) ebenfalls eine Primärwelle (9), die mit einer Antriebsquelle verbunden ist, ein Primärgetriebe (10) zum Antrieb der Mähelemente (7) und ein Sekundärgetriebe (11) zum Antrieb der Gruppierschnecke (6') aufweist, wobei diese Primär- und Sekundärgetriebe (10, 11) kinematisch mit der Primärwelle (9) verbunden werden können,
Mähmaschine (1) **dadurch gekennzeichnet, dass** das Sekundärgetriebe (11) sich auf der Seite des Innenendes (3') der Arbeitseinheit (3) zu welcher die gemähten Produkten von der Gruppierschnecke (6') bewegt werden, erstreckt.

2. Mähmaschine nach Anspruch 1, **dadurch gekennzeichnet, dass** die Arbeitseinheit (3) ebenfalls eine Transportkonfiguration einnehmen kann, und dass in der Transportkonfiguration und/oder in der Manövrierkonfiguration der Arbeitseinheit (3), sein Innenende (3') sich in unterer Stellung in Bezug auf sein Aussenende (3") befindet.

3. Mähmaschine nach Anspruch 1 oder 2, **dadurch gekennzeichnet**, das die Arbeitseinheit (3) eine Verteilvorrichtung (13) umfasst, von welcher aus das Primärgetriebe (10) spezifisch für die Mähelemente (7) und das Sekundärgetriebe spezifisch für die Gruppierschnecke (6') ist.

4. Mähmaschine nach Anspruch 3, **dadurch gekennzeichnet, dass** die Verteilvorrichtung (13) und das Primärgetriebe (10) auf der Seite des Innenendes (3') der Arbeitseinheit (3) angeordnet sind.

5. Mähmaschine nach irgend einem der Ansprüche 1 bis 4, **dadurch gekennzeichnet, dass** die Gruppierschnecke (6') über eine Innenstütze (14) und eine Aussenstütze (14') mit einem Gestell (4) der Arbeitseinheit (3) verbunden ist, wobei das Sekundärgetriebe (11) der Innenstütze (14) zugeordnet ist, indem es entweder fest mit dieser Innenstütze (14) verbunden ist oder in diese integriert ist.

6. Mähmaschine nach irgend einem der Ansprüche 1 bis 5, **dadurch gekennzeichnet, dass** das Sekundärgetriebe (11) zum Antrieb der Gruppierschnecke (6') in Form einer Anordnung (22) von ineinandergreifenden Ritzeln dargestellt ist, welche die Primärwelle (9) mit der Gruppierschnecke (6') kinematisch verbindet.

7. Mähmaschine nach irgend einem der Ansprüche 1 bis 6, **dadurch gekennzeichnet, dass** der Mähbalken (5) in der Nähe des Innenendes (3') der Arbeitseinheit (3) über einen Stützpfosten (15) mit dem oder einem Gestell (4) der Arbeitseinheit (3) verbunden ist.

8. Mähmaschine nach irgend einem der Ansprüche 5 und 7, **dadurch gekennzeichnet, dass** die Gruppierschnecke (6') über die oder eine Innenstütze (14) und die oder eine Aussenstütze (14') mit dem Gestell (4) der Arbeitseinheit (3) verbunden ist und, dass die Arbeitseinheit (3) weiter eine Abtransportschnecke (18) umfasst, die in der axialen Verlängerung der Gruppierschnecke (6') zwischen dem Rahmen (2) und der Innenstütze (14) angeordnet ist.

9. Mähmaschine nach irgend einem der Ansprüche 1 bis 8, **dadurch gekennzeichnet, dass** die Arbeitseinheit (3) mit dem Tragarm (12) über eine Versatzstange (19) verbunden ist, die derart an dem Tragarm (12) und der Arbeitseinheit (3) angelenkt ist, dass sie im Wesentlichen in Längsrichtung zur Schneckenachse (AR) bewegt werden kann.

10. Mähmaschine nach irgend einem der Ansprüche 5, 7 und 8, **dadurch gekennzeichnet, dass** die Gruppierschnecke (6') über die oder eine Innenstütze (14) und die oder eine Aussenstütze (14') mit dem Gestell (4) der Arbeitseinheit (3) verbunden ist und, dass die Innenstütze (14), entlang der Schneckenachse (AR) gesehen, Abmessungen aufweist, die den Aussendurchmesser des Kerns der Gruppierschnecke (6') zumindest in ihrer hinteren Hälfte nicht überschreiten.

## Claims

1. Mowing machine (1) intended to be moved in a direction of advance (A) and comprising a chassis (2) and at least one work unit (3) of elongate shape and connected to the chassis (2) by means of a support arm (12) able to pivot with respect to the chassis (2) around an elevation axis (12a), so as to pass the work unit (3) from an operating configuration, in which it is in contact with a soil (S), to at least one maneuvering configuration, in which the work unit (3) is raised slightly away from the soil, the work unit (3) comprising a cutterbar (5) and a grouping device (6) for the cut product, the cutterbar (5) comprising a plurality of cutting elements (7) driven in rotation and substantially aligned transversally to the direction of advance (A) of the mowing machine (1) in use, the grouping device (6) being located behind the cutterbar (5) along the direction of advance (A) and comprising a grouping auger (6') which is mounted with rotational guidance around an auger axis (AR) at least substantially perpendicular to the direction of advance (A), the coils of the grouping auger (6') being oriented in such a manner that its rotation makes it possible to move the cut products transversally to the direction of advance (A) towards the chassis (2), the work unit (3) also comprising a primary shaft (9) connected to a drive supply, a primary gearbox (10) to drive the cutting elements (7) and a secondary gearbox (11) to drive the grouping auger (6'), these primary and secondary gearboxes (10, 11) being kinematically connectable to the primary shaft (9),
mowing machine (1) **characterized in that** the secondary gearbox (11) is located on the side of the inner end (3') of the work unit (3) towards which the cut products are moved by the grouping auger (6').

2. Mowing machine according to claim 1, **characterized in that** the work unit (3) may also occupy a transport configuration and **in that** in the transport configuration and/or the maneuvering configuration of the work unit (3), its inner end (3') is in a lower position than its outer end (3").

3. Mowing machine according to claim 1 or 2, **characterized in that** the work unit (3) comprises a distribution device (13) from which the primary gearbox (10) is specific to the cutting elements (7) and the secondary gearbox (11) is specific to the grouping auger (6').

4. Mowing machine according to claim 3, **characterized in that** the distribution device (13) and the primary gearbox (10) are located on the side of the inner end (3') of the work unit (3).

5. Mowing machine according to any one of claims 1 to 4, **characterized in that** the grouping auger (6') is connected to a frame (4) of the work unit (3) by an inner support (14) and an outer support (14'), the secondary gearbox (11) being associated with the inner support (14) either by being rigidly fastened to this inner support (14) or by being integrated therein.

6. Mowing machine according to any one of claims 1 à 5, **characterized in that** the secondary gearbox (11) for driving the grouping auger (6') is achieved as an arrangement (22) of mutually intermeshing pinions, kinematically connecting the primary shaft (9) to the grouping auger (6').

7. Mowing machine according to any one of claims 1 to 6, **characterized in that** the cutterbar (5) is connected to the or a frame (4) of the work unit (3) by an upright post (15) near the inner end (3') of the work unit (3).

8. Mowing machine according to any one of claims 5 and 7, **characterized in that** the grouping auger (6') is connected to the frame (4) of the work unit (3) by the or an inner support (14) and the or an outer support (14'), and **in that** the work unit (3) further comprises a discharge auger (18) arranged in axial prolongation with the grouping auger (6') between the chassis (2) and the inner support (14).

9. Mowing machine according to any one of claims 1 to 8, **characterized in that** the work unit (3) is connected to the support arm (12) by means of an offset rod (19) articulated to the support arm (12) and to the work unit (3) in order to be movable substantially longitudinally to the auger axis (AR).

10. Mowing machine according to any one of claims 5, 7 and 8, **characterized in that** the grouping auger (6') is connected to the frame (4) of the work unit (3) by the or an inner support (14) and the or an outer support (14'), and **in that** the inner support (14) has, viewed along the auger axis (AR), dimensions that do not exceed the outer diameter of the core of the grouping auger (6'), at least over its rear half.
